# EUROPÄISCHE PATENTSCHRIFT

(11) **EP 1 588 076 B1**
(45) Veröffentlichungstag und Bekanntmachung des Hinweises auf die Patenterteilung: **23.03.2011**
(21) Anmeldenummer: 04701929.4
(22) Anmeldetag: 14.01.2004
(51) Int. Cl.: F16H 57/04, F01P 11/08, F01P 7/16

(54) **KÜHLKREISLAUF, INSBESONDERE FÜR EIN KRAFTFAHRZEUGGETRIEBE**
COOLING CIRCUIT, ESPECIALLY FOR A MOTOR VEHICLE TRANSMISSION
CIRCUIT DE REFROIDISSEMENT, EN PARTICULIER POUR TRANSMISSION DE VEHICULE AUTOMOBILE

(30) Priorität: 15.01.2003 DE 10301314
(43) Veröffentlichungstag der Anmeldung: 26.10.2005
(73) Patentinhaber: Behr GmbH & Co. KG, 70469 Stuttgart (DE)
(72) Erfinder: FLIK, Markus, 70839 Gerlingen (DE); THUMM, Andreas, 74360 Ilsfeld (DE)
(86) Internationale Anmeldenummer: PCT/EP2004/000204
(87) Internationale Veröffentlichungsnummer: WO 2004/063600

(56) Entgegenhaltungen:
- US-A1- 2002 128 107
- US-B1- 6 427 640
- PATENT ABSTRACTS OF JAPAN vol. 1999, no. 14, 22 December 1999 (1999-12-22) -& JP 11 264318 A (CALSONIC CORP; NISSAN MOTOR CO LTD), 28 September 1999 (1999-09-28)
- PATENT ABSTRACTS OF JAPAN vol. 2000, no. 05, 14 September 2000 (2000-09-14) & JP 2000 046156 A (NISSAN MOTOR CO LTD), 18 February 2000 (2000-02-18)
- PATENT ABSTRACTS OF JAPAN vol. 2000, no. 15, 6 April 2001 (2001-04-06) & JP 2000 356261 A (SUZUKI MOTOR CORP), 26 December 2000 (2000-12-26)

## Beschreibung

Die Erfindung betrifft einen Kühlkreislauf, insbesondere für ein Kraftfahrzeuggetriebe, gemäß Oberbegriff des Anspruchs 1 und ein zugehöriges Betriebsverfahren.

Herkömmliche Kraftfahrzeuggetriebe weisen normalerweise einen Kühlkreislauf auf, in dem in einem Wärmeübertrager die Wärme eines ersten Fluids, beispielsweise Öl, auf ein zweites Fluid, beispielsweise ein Kühlmittel eines Motorkühlkreislaufs, übertragen wird.

Bei dieser Anordnung wird durch den Wärmeübertrager die Temperatur des Kühlmittels des Motorkühlkreislaufs erhöht. Dies könnte insbesondere bei Getrieben mit einer großen Abwärme, beispielsweise CVT-Getrieben, zu Problemen führen, da dann die Motorkühlsysteme entsprechend angepaßt werden müßten, um die zusätzliche Wärme abführen zu können.

Die US 2002/128107 A1 offenbart ein Kühlsystem für ein Arbeitsfluid eines automatischen Getriebes.

Die gattungsbildende US 6427640 B1 offenbart einen Kreislauf zur Erwärmung von Fluiden in einem Fahrzeug.

Der Erfindung liegt die Aufgabe zu Grunde, einen Kühlkreislauf, insbesondere für ein Kraftfahrzeuggetriebe, und ein zugehöriges Kühlverfahren anzugeben. Durch den erfindungsgemäßen Kühlkreislauf und das zugehörige Verfahren soll eine effektive Kühlung, insbesondere eines Fahrzeuggetriebes ermöglicht werden, ohne die Temperatur eines zweiten Fluids, beispielsweise das Kühlmittel des Motorkühlkreislaufs, zu stark zu erhöhen.

Diese Aufgabe wird erfindungsgemäß durch einen Kühlkreislauf mit den Merkmalen des Patentanspruches 1 und bezüglich des Verfahrens mit den Merkmalen des Patentanspruchs 8 gelöst.

Die abhängigen Patentansprüche betreffen vorteilhafte Aus- und Weiterbildungen der Erfindung.

Ein Hauptgedanke der Erfindung besteht darin, in einem Kühlkreislauf, insbesondere für ein Kraftfahrzeuggetriebe, zwei Wärmeübertrager in Reihe zu schalten, wobei die beiden Wärmeübertrager die Wärme von einem ersten Fluid auf ein zweites oder drittes Fluid übertragen. Bei einer besonders vorteilhaften Ausführungsform ist das erste Fluid ein Getriebeöl, das seine Wärme in einem ersten Wärmeübertrager an ein zweites Fluid, beispielsweise an ein Kühlmittel, insbesondere an das Kohlmittel eines Motorkühlkreislaufs, und in einem zweiten Wärmeübertrager an ein drittes Fluid, beispielsweise an Luft abgibt, die durch den zweiten Wärmeübertrager geführt wird.

Durch die Verwendung des zweiten Wärmeübertragers ist sichergestellt, das die Temperatur des zweiten Fluids nicht zu stark ansteigt, insbesondere wenn der zweite Wärmeübertrager so ausgelegt ist, das der größte Teil der Abwärme aus dem ersten Fluid an das dritte Fluid übertragbar ist. Insbesondere ist die gesamte Abwärme aus dem ersten Fluid an das dritte Fluid übertragbar.

Bei einer besonders vorteilhaften Ausführungsform ist eine Bypassleitung im Kühlkreislauf vorhanden, mit der der erste oder der zweite Wärmeübertrager umgangen werden kann. In Verbindung mit einem Ventil, das zwischen dem ersten Wärmeübertrager und dem zweiten Wärmeübertrager und/oder in der Bypassleitung angeordnet ist, besteht dann die Möglichkeit die Temperatur des erste Fluids unter Berücksichtigung der Temperatur des zweiten Fluids einfach zu steuern bzw. zu regeln. Selbstverständlich ist es auch möglich weitere Größen in die Ventilsteuerung, beispielsweise die Temperatur des dritten Fluids, zu übernehmen. Abhängig von der Temperatur und der Anordnung öffnet oder schließt das Ventil. Wenn das Ventil in der Bypassleitung angeordnet ist, dann verkleinert sich der Durchfluß mit steigender Temperatur. Wenn das Ventil zwischen den beiden Wärmeübertragern angeordnet ist, dann wird der Durchfluß mit steigender Temperatur vergrößert. Als Alternative kann auch ein Proportionalventil verwendet werden, wodurch ermöglicht wird die Strömung des erste Fluids durch den zweiten Wärmeübertrager variabel zu gestalten.

Das mindestens eine Ventil kann als ein Thermostatventil oder ein mittels Dehnstoff gesteuertes Ventil, insbesondere ein Wachsventil ausgeführt sein. Zudem ist es möglich ein elektronisch steuerbares Ventil einzusetzen.

Bei der Verwendung des Kühlkreislaufes für ein Fahrzeuggetriebe, kann der als Öl/Kühlmittel-Wärmeübertrager ausgeführte erste Wärmeübertrager innerhalb eines Kühlmittel/ILuft-Wärmeübertrager des zugehörigen Motorkühlkreislaufs angeordnet sein, insbesondere innerhalb eines Wasserkastens des Kühlmittel/Luft-Wärmeübertragers.

Der Hauptgedanke des erfindungsgemäßen Verfahrens zum Kühlen einer wärmeerzeugenden Komponente besteht darin, zwei verschieden Betriebsarten vorzusehen, wobei in einer ersten Betriebsart nur der erste Wärmeübertrager und in einer zweiten Betriebsart der erste und der zweite Wärmeübertrager betrieben werden und wobei die beiden Wärmeübertrager die Wärme des erste Fluids an unterschiedliche Fluids übertragen. Das Umschalten zwischen den Betriebsarten erfolgt abhängig von vorgebbaren Temperaturschwellwerten, wobei die Temperaturen aller Fluids bei einem Umschaltvorgang berücksichtigt werden können. Das Umschalten kann beispielsweise durch ein oder mehrere Ventile erfolgen, die im Kreislauf angeordnet sind.

Zudem kann vorgesehen werden, dass der zweite Wärmeübertrager nicht vollständig in den Kreislauf zugeschaltet oder umgangen wird, sondern das die entsprechenden Steuermittel (Ventile) über beliebige Zwischenstellungen verfügen, die insbesondere von einer aktuellen Temperatur des ersten und/oder des zweiten und/oder des dritten Fluids abhängig sind, so dass das erste Fluid nur teilweise durch den zweiten Wärmeübertrager strömt und teilweise durch eine Bypassleitung am zweiten Wärmeübertrager vorbei geleitet wird.

Bei einer bevorzugten Ausführungsform ist das erste Fluid ein Getriebeöl, das zweite Fluid ein Kühlmittel, insbesondere das Kühlmittel eines Motorkühlkreislaufs, und das dritte Fluid Luft, wobei die erste Betriebsart ein Leerlaufbetrieb und die zweite Betriebsart insbesondere ein Normalbetrieb, ein Teil- oder ein Volllastbetrieb des Fahrzeuggetriebes ist.

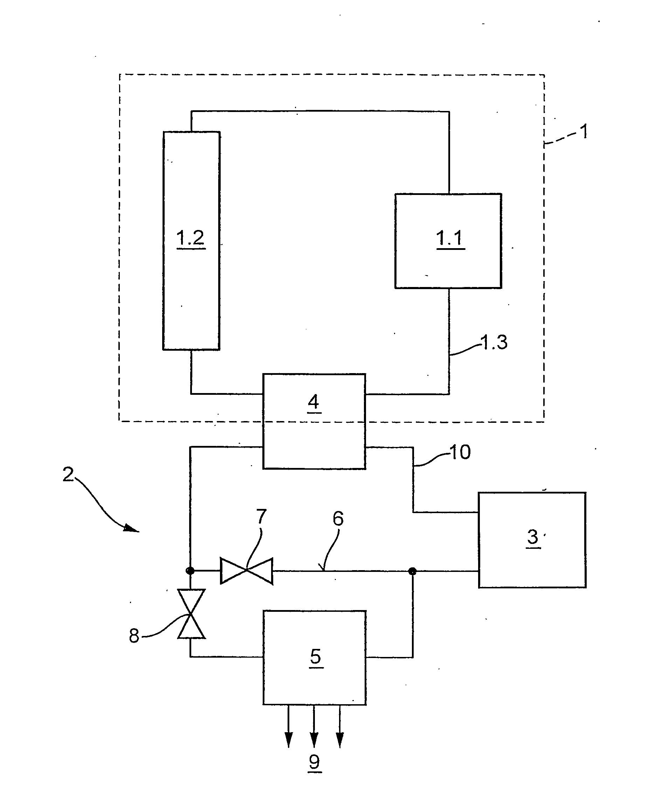

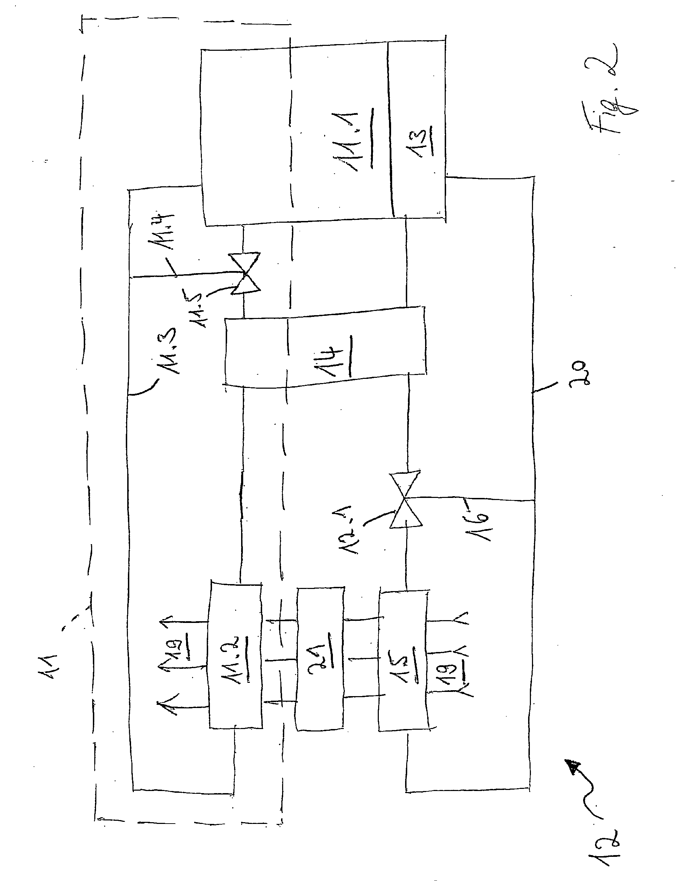

Nachfolgend werden Ausführungsbeispiele der Erfindung anhand der Zeichnungen näher erläutert. Die Fig. 1 und 2 zeigen jeweils eine systematische Darstellung eines erfindungsgemäßen Kühlkreislaufs.

Wie aus Fig. 1 ersichtlich ist, umfaßt ein erfindungsgemäßer Kühlkreislauf 2 eine zu kühlende Komponente 3, beispielsweise ein Fahrzeuggetriebe, einen ersten Wärmeübertrager 4, beispielsweise einen Öl/Kühlmittel-Wärmeübertrager, der die Wärme von einem im Kreislauf strömenden ersten Fluid 10 an ein zweites Fluid 1.3 überträgt, wobei das zweite Fluid 1.3 beispielsweise ein Kühlmittel ist, das in einem anderen Kühlkreislauf 1 zur Kühlung einer anderen Komponente 1.1, beispielsweise eines Fahrzeugmotors, durch einen weiteren Wärmeübertrager 1.2, beispielsweise eines Kühlmittel/Luft-Wärmeübertragers (Kühler) verwendet wird.

Der Kühlkreislauf 2 umfaßt weiter einen zweiten Wärmeübertrager 5, der die Wärme des ersten Fluids 10 an ein drittes Fluid 9 überträgt, beispielsweise an Luft die durch den zweiten Wärmeübertrager 5 geleitet wird. Der zweite Wärmeübertrager kann durch eine Bypassleitung 6 in Abhängigkeit von Stellungen der beiden Ventile 7, 8 umgangen werden, oder wie bereits ausgeführt teilweise oder vollständig vom ersten Fluid 10 durchströmt werden. Der Anteil der Durchströmung hängt von der Betriebsart, in der der Kühlkreislauf 2 betrieben wird und von der aktuellen Temperatur eines oder mehrerer der Fluide 1.3, 9, 10 ab, zumindest jedoch von der Temperatur des ersten Fluids 10. Das dargestellte Ausführungsbeispiel zeigt zwar zwei Ventile 7, 8 zur Steuerung des Kühlkreislaufs 2, es ist aber möglich nur mit dem Ventil 7 in der Bypassleitung 6 oder nur mit dem Ventil 8 vor dem zweiten Wärmeübertrager 5 die Steuerung zu realisieren.

In Fig. 2 ist ein weiterer Kühlkreislauf 12 dargestellt, der eine zu kühlende Komponente 13, beispielsweise ein mit einem Fahrzeugmotor 11.1 zusammenwirkendes Getriebe, einen ersten Wärmeübertrager 14, beispielsweise einen Öl/Kühlmittel-Wärmeübertrager, der die Wärme von einem im Kreislauf strömenden ersten Fluid 20 an ein zweites Fluid 11.3 überträgt, wobei das zweite Fluid 11.3 beispielsweise ein Kühlmittel ist, das in einem anderen Kühlkreislauf 11 zur Kühlung einer anderen Komponente 11.1, beispielsweise eines Fahrzeugmotors, durch einen weiteren Wärmeübertrager 11.2, beispielsweise eines Kühlmittel/Luft-Wärmeübertragers (Kühler) verwendet wird. Um eine raumsparende Bauweise zu bewerkstelligen, ist der Wärmeübertager 14 vorzugsweise innerhalb eines Sammel- oder Verteilkastens des Wärmeübertragers 11.2 angeordnet.

Eine Bypassleitung 11.4 dient einer unter Umständen erwünschten Umgehung der Wärmeübertrager 11.2 und 14 mittels eines ersten Thermostatventils 11.5, das beispielsweise bis zu einer vorgegebenen Temperatur des Kühlmittels die Bypassleitung freigibt, um ein schnelleres Aufwärmen des Fahrzeugmotors 11.1 zu bewirken.

Der zweite Wärmeübertrager kann durch eine Bypassleitung 16 in Abhängigkeit von Stellungen eines Thermostatventils 12.1 umgangen werden, oder wie bereits ausgeführt teilweise oder vollständig vom ersten Fluid 20 durchströmt werden. Der Anteil der Durchströmung hängt von der Betriebsart, in der der Kühlkreislauf 12 betrieben wird und von der aktuellen Temperatur eines oder mehrerer der Fluide 11.3, 19, 20 ab, zumindest jedoch von der Temperatur des ersten Fluids 20.

Der Kühlkreislauf 12 umfaßt weiter einen zweiten Wärmeübertrager 15, der die Wärme des ersten Fluids 20 an ein drittes Fluid 19 überträgt, beispielsweise an Luft die durch den zweiten Wärmeübertrager 15, gegebenenfalls durch einen weiteren Wärmeübertrager 21, wie beispielsweise einen Kondensator einer Klimaanlage, und durch den Wärmeübertrager 11.2 geleitet wird.

Der zweite Wärmeübertrager kann durch eine Bypassleitung 16 in Abhängigkeit von Stellungen eines zweiten Thermostatventils 12.1 umgangen werden, oder wie bereits ausgeführt teilweise oder vollständig vom ersten Fluid 20 durchströmt werden. Der Anteil der Durchströmung hängt von der Betriebsart, in der der Kühlkreislauf 12 betrieben wird und von der aktuellen Temperatur eines oder mehrerer der Fluide 11.3, 19, 20 ab, zumindest jedoch von der Temperatur des ersten Fluids 20. Da der Wärmeübertrager 15 gegebenenfalls die Kühlluft 19 für den Wärmeübertrager 11.2 und den Kondensator 21 vorwärmt, was unter Umständen deren Leistungsfähigkeit beeinträchtigt, ist es wünschenswert, den Wärmeübertrager 15 so selten wie möglich mit heißem Fluid 20 zu beaufschlagen. Aus diesem Grund gibt das zweite Thermostatventil 12.1 die Bypassleitung bevorzugt bis zu einer vorgegebenen Grenztemperatur frei, so daß der Wärmeübertrager 15 nur dann betrieben wird, wenn die Kühlung des Fluids 20 durch den Wärmeübertrager 14 unzureichend ist oder zumindest ergänzt werden soll.

## Patentansprüche

1. Kühlkreislauf (2), insbesondere für ein Kraftfahrzeuggetriebe, mit mindestens zwei in Reihe geschalteten Wärmeübertragern (4, 5), wobei ein erster Wärmeübertrager (4) eine Wärmeübertragung von einem ersten (10) auf ein zweites Fluid (1.3) bewirkt, und wobei ein zweiter Wärmeübertrager (5) eine Wärmeübertragung von dem ersten (10) auf ein drittes Fluid (9) bewirkt und mindestens zwei Ventile (7, 8), insbesondere Thermostatventile (12.1), vorhanden sind, **dadurch gekennzeichnet, dass** ein erstes Ventil (7) zwischen dem ersten Wärmeübertrager (4) und dem zweiten Wärmeübertrager (5) und ein zweites Ventil (7) in einer dem zweiten Wärmeübertragers (5) umgehenden Bypassleitung (6) angeordnet ist, wobei mindestens das erste oder das zweite Ventil (7, 8) in Abhängigkeit von einer Temperatur des ersten und des zweiten und/oder des dritten Fluids (10, 1.3, 9) öffnet oder schließt.

2. Kühlkreislauf nach Anspruch 1, **dadurch gekennzeichnet, dass** der erste oder der zweite Wärmeübertrager (4, 5) durch eine Bypassleitung (6) umgehbar ist.

3. Kühlkreislauf nach Anspruch 1, **dadurch gekennzeichnet, dass** wenn das Ventil (7) in der Bypassleitung (6) angeordnet ist, der Durchfluß mit steigender Fluidtemperatur verkleinert wird und, wenn das Ventil (8) zwischen den beiden Wärmeübertragern (4, 5) angeordnet ist, der Durchfluß mit steigender Fluidtemperatur vergrößert wird.

4. Kühlkreislauf nach einem der Ansprüche 1 bis 3, **dadurch gekennzeichnet, dass** das mindestens eine Ventil (7, 8) ein Thermostatventil oder ein mittels Dehnstoff gesteuertes Ventil, insbesondere ein Wachsventil ist.

5. Kühlkreislauf nach einem der vorherigen Ansprüche, **dadurch gekennzeichnet, dass** der erste Wärmeübertrager (4) ein Öl/Kühlmittel-Wärmeübertrager ist, und dass der zweite Wärmeübertrager (5) ein Öl/Luft-Wärmeübertrager ist.

6. Kühlkreislauf nach Anspruch 5, **dadurch gekennzeichnet, dass** der Öl/Kühlmittel-Wärmeübertrager (4) innerhalb eines Kühlmittel/ILuft-Wärmeübertrager (1.2) eines Motorkühlkreislaufs angeordnet ist.

7. Kühlkreislauf nach Anspruch 6, **dadurch gekennzeichnet, dass** der Öl/Kühlmittel-Wärmeübertrager (4) innerhalb eines Wasserkastens des Kühlmittel/Luft-Wärmeübertragers (1.2) angeordnet ist.

8. Verfahren zum Kühlen einer wärmeerzeugenden Komponente (3), insbesondere eines Kraftfahrzeuggetriebes, wobei in einer ersten Betriebsart ein erster Wärmeübertrager (4) Wärme von einem ersten Fluid (10) auf ein zweites Fluid (1.3) überträgt, und wenn in der ersten Betriebsart eine Temperatur des ersten Fluids (10) und/oder des zweiten Fluids (1.3) und/oder eines dritten Fluids (9) einen vorgebbaren ersten Temperaturschwellwert erreicht oder übersteigt, in eine zweiten Betriebsart umgeschaltet wird, wobei in der zweiten Betriebsart ein zusätzlicher zweiter Wärmeübertrager (5), der Wärme vom ersten Fluid (10) auf das dritte Fluid (9) überträgt, zugeschaltet ist und die Umschaltvorgänge zwischen den Betriebsarten durch mindestens ein Ventil (7, 8) durchgeführt werden, das im Kreislauf (2) des ersten Fluids (10) angeordnet ist, **dadurch gekennzeichnet, dass** in Abhängigkeit von der Temperatur des ersten Fluids (10) und des zweiten Fluids (1.3) und/oder des dritten Fluids (9) durch das mindestens eine Ventil (7, 8) der zweite Wärmeübertrager (5) mittels einem Bypass (6) umgangen oder in den Kreislauf (2) des ersten Fluids (10) zugeschaltet wird.

9. Verfahren nach Anspruch 8, weiter **dadurch gekennzeichnet, dass** wenn das erste Fluid (10) und das zweite Fluid (1.3) und/oder das dritte Fluid (9) in der zweiten Betriebsart einen vorgebbaren zweiten Temperaturschwellwert erreicht oder unterschreitet, von der zweiten Betriebsart in die erste Betriebsart umgeschaltet wird.

10. Verfahren nach Anspruch 8, weiter **dadurch gekennzeichnet, dass** das mindestens eine Ventil (7, 8) in der zweiten Betriebsart beliebige Zwischenstellungen einnimmt, in denen das erste Fluid (10) nur teilweise durch den zweiten Wärmeübertrager (5) strömt.

11. Verfahren nach einem der Ansprüche 8 bis 10, **dadurch gekennzeichnet, dass** das erste Fluid (10) ein Getriebeöl ist, das zweite Fluid (1.3) ein Kühlmittel, insbesondere das Kühlmittel eines Motorkühlkreislaufs (1.3), und das dritte Fluid (9) Luft ist.

12. Verfahren nach einem der Ansprüche 8 bis 11, **dadurch gekennzeichnet, dass** die erste Betriebsart ein Leerlaufbetrieb der zu kühlenden Komponente (3) ist.

13. Verfahren nach einem der Ansprüche 8 bis 12, **dadurch gekennzeichnet, dass** die zweite Betriebsart ein Normalbetrieb oder ein Volllastbetrieb der zu kühlenden Komponente (3) ist.

## Claims

1. A cooling circuit (2), in particular for a motor vehicle transmission, comprising at least two series-connected heat exchangers (4, 5), wherein a first heat exchanger (4) causes heat to be transferred from a first (10) to a second fluid (1.3), and wherein a second heat exchanger (5) causes heat to be transferred from the first (10) to a third fluid (9), and at least two valves (7, 8), in particular thermostat valves (12.1), are present, **characterized in that**
a first valve (7) is disposed between the first heat exchanger (4) and the second heat exchanger (5), and a second valve (7) is disposed in a bypass line (6) that bypasses the second heat exchanger (5), wherein at least the first or the second valve (7, 8) opens or closes as a function of a temperature of the first and the second and/or the third fluids (10, 1.3, 9).

2. The cooling circuit according to claim 1, **characterized in that** the first or the second heat exchanger (4, 5) can be bypassed by a bypass line (6).

3. The cooling circuit according to claim 1, **characterized in that**, when the valve (7) is disposed in the bypass line (6), flow is reduced as the fluid temperature increases and, when the valve (8) is disposed between the two heat exchangers (4, 5), flow is increased as the fluid temperature increases.

4. The cooling circuit according to one of the claims 1 to 3, **characterized in that** the at least one valve (7, 8) is a thermostat valve or a valve controlled using expansion material, in particular a wax valve.

5. The cooling circuit according to one of the preceding claims, **characterized in that** the first heat exchanger (4) is an oil/coolant heat exchanger, and the second heat exchanger (5) is an oil/air heat exchanger.

6. The cooling circuit according to claim 5, **characterized in that** the oil/coolant heat exchanger (4) is disposed inside a coolant/air heat exchanger (1.2) of an engine coolant circuit.

7. The cooling circuit according to claim 6, **characterized in that** the oil/coolant heat exchanger (4) is disposed inside of a water tank of the coolant/air heat exchanger (1.2).

8. A method for cooling a heat-generating component (3), in particular of a motor vehicle transmission, wherein, in a first operating mode, a first heat exchanger (4) transfers heat from a first fluid (10) to a second fluid (1.3), and, in the first operating mode, when a temperature of the first fluid (10) and/or the second fluid (1.3) and/or a third fluid (9) reaches or exceeds a specifiable first temperature threshold value, a second operating mode is switched to, wherein, in the second operating mode, an additional second heat exchanger (5), which transfers heat from the first fluid (10) to the third fluid (9), is connected thereto and the switching procedures between the operating modes are implemented by at least one valve (7, 8) which is disposed in the
circuit (2) of the first fluid (10), **characterized in that**, depending on the temperature of the first fluid (10) and the second fluid (1.3) and/or the third fluid (9) through the at least one valve (7, 8), the second heat exchanger (5) is bypassed by a bypass (6) or is connected into the circuit (2) of the first fluid (10).

9. The method according to claim 8, further **characterized in that**, when the first fluid (10) and the second fluid (1.3) and/or the third fluid (9) reach or fall below a specifiable second temperature threshold value in the second operating mode, a switch occurs from the second operating mode to the first operating mode.

10. The method according to claim 8, further **characterized in that**, in the second operating mode, the at least one valve (7, 8) assumes any intermediate position in which the first fluid (10) only partially flows through the second heat exchanger (5).

11. The method according to one of the claims 8 to 10, **characterized in that** the first fluid (10) is a transmission fluid, the second fluid (1.3) is a coolant, in particular the coolant of an engine cooling circuit (1.3), and the third fluid (9) is air.

12. The method according to one of the claims 8 to 11, **characterized in that** the first operating mode is a no-load operation of the component (3) to be cooled.

13. The method according to one of the claims 8 to 12, **characterized in that** the second operating mode is a normal operation or a full-load operation of the component (3) to be cooled.

## Revendications

1. Circuit de refroidissement (2), en particulier pour une boîte de vitesses d'un véhicule automobile, comprenant au moins deux échangeurs de chaleur (4, 5) montés en série, où un premier échangeur de chaleur (4) déclenche un transfert de chaleur, d'un premier fluide (10) à un deuxième fluide (1.3), et où un deuxième échangeur de chaleur (5) déclenche un transfert de chaleur, du premier fluide (10) à un troisième fluide (9), et au moins deux soupapes (7, 8), en particulier des soupapes thermostatiques (12.1), sont présentes,
**caractérisé en ce qu'**une première soupape (7) est disposée entre le premier échangeur de chaleur (4) et le deuxième échangeur de chaleur (5), et une deuxième soupape (7) est disposée dans une conduite de dérivation (6) entourant le deuxième échangeur de chaleur (5), où au moins la première ou la deuxième soupapes (7, 8) s'ouvre ou se ferme en fonction d'une température du premier et du deuxième et / ou du troisième fluide (10, 1.3, 9).

2. Circuit de refroidissement selon la revendication 1, **caractérisé en ce que** le premier ou le deuxième échangeur de chaleur (4, 5) peut être contourné par une conduite de dérivation (6).

3. Circuit de refroidissement selon la revendication 1, **caractérisé en ce que**, lorsque la soupape (7) est disposée dans la conduite de dérivation (6), le débit est réduit avec une température de fluide qui s'élève et, lorsque la soupape (8) est disposée entre les deux échangeurs de chaleur (4, 5), le débit est augmenté avec une température de fluide qui s'élève.

4. Circuit de refroidissement selon l'une quelconque des revendications 1 à 3, **caractérisé en ce que** la soupape (7, 8) au moins au nombre de un est une soupape thermostatique ou une soupape commandée au moyen d'une matière extensible, en particulier une soupape en cire.

5. Circuit de refroidissement selon l'une quelconque des revendications précédentes, **caractérisé en ce que** le premier échangeur de chaleur (4) est un échangeur de chaleur huile / liquide de refroidissement, et **en ce que** le deuxième échangeur de chaleur (5) est un échangeur de chaleur huile / air.

6. Circuit de refroidissement selon la revendication 5, **caractérisé en ce que** l'échangeur de chaleur huile / liquide de refroidissement (4) est disposé à l'intérieur d'un échangeur de chaleur liquide de refroidissement / air (1.2) d'un circuit de refroidissement du moteur.

7. Circuit de refroidissement selon la revendication 6, **caractérisé en ce que** l'échangeur de chaleur huile / liquide de refroidissement (4) est disposé à l'intérieur d'une boite à eau de l'échangeur de chaleur liquide de refroidissement / air (1.2).

8. Procédé de refroidissement d'un composant (3) produisant de la chaleur, en particulier d'une boîte de vitesses d'un véhicule automobile, où, dans un premier mode de fonctionnement, un premier échangeur de chaleur (4) transfère de la chaleur passant d'un premier fluide (10) à un deuxième fluide (1.3), et lorsque, dans le premier mode de fonctionnement, une température du premier fluide (10) et / ou du deuxième fluide (1.3) et / ou d'un troisième fluide atteint ou dépasse la limite supérieure d'une première valeur de seuil de température pouvant être prédéfinie, ledit premier échangeur de chaleur passe dans un deuxième mode de fonctionnement où, dans le deuxième mode de fonctionnement, un deuxième échangeur de chaleur supplémentaire (5), qui transfère de la chaleur, du premier fluide (10) au troisième fluide (9), est mis en circuit, et les processus permettant de passer d'un mode de fonctionnement à l'autre sont exécutés par au moins une soupape (7, 8) qui est disposée dans le circuit (2) du premier fluide (10),
**caractérisé en ce que**, en fonction de la température du premier fluide (10) et du deuxième fluide (1.3) et / ou du troisième fluide (9) traversant la soupape (7, 8) au moins au nombre de un, le deuxième échangeur de chaleur (5) est contourné par une dérivation (6) ou ajouté au circuit (2) du premier fluide (10).

9. Procédé selon la revendication 8, **caractérisé en outre par le fait que**, lorsque le premier fluide (10), le deuxième fluide (1.3) et / ou le troisième fluide (9), dans le deuxième mode de fonctionnement, atteignent ou dépassent la limite inférieure d'une deuxième valeur de seuil de température pouvant être prédéfinie, le système passe du deuxième mode de fonctionnement au premier mode de fonctionnement.

10. Procédé selon la revendication 8, **caractérisé en outre par le fait que** la soupape (7, 8) au moins au nombre de un, dans le deuxième mode de fonctionnement, prend des positions intermédiaires quelconques dans lesquelles le premier fluide (10) s'écoule seulement de façon partielle à travers le deuxième échangeur de chaleur (5).

11. Procédé selon l'une quelconque des revendications 8 à 10, **caractérisé en ce que** le premier fluide (10) est une huile de boite de vitesses, le deuxième fluide (1.3) un liquide de refroidissement, en particulier le liquide de refroidissement d'un circuit de refroidissement (1.3) du moteur, le troisième fluide (9) étant de l'air.

12. Procédé selon l'une quelconque des revendications 8 à 11, **caractérisé en ce que** le premier mode de fonctionnement est un fonctionnement en position neutre du composant (3) à refroidir.

13. Procédé selon l'une quelconque des revendications 8 à 12, **caractérisé en ce que** le deuxième mode de fonctionnement est un fonctionnement normal ou un fonctionnement à pleine charge du composant (3) à refroidir.
